# NEW EUROPEAN PATENT SPECIFICATION

(11) **EP 2 535 609 B2**
(45) Date of publication and mention of the opposition decision: **30.06.2021**
(45) Mention of the grant of the patent: 21.01.2015
(21) Application number: 11305763.2
(22) Date of filing: 17.06.2011
(51) Int. Cl.: F16C 27/04, F01D 25/12, F04D 25/02, F04D 29/059, F02C 6/12, F01D 25/16, F16C 19/18, F16C 37/00

(54) **Turbocharger, notably for a combustion engine**
Turbolader, insbesondere für einen Verbrennungsmotor
Turbocompresseur, notamment pour moteur à combustion

(43) Date of publication of application: 19.12.2012
(73) Proprietor: Aktiebolaget SKF, 415 50 Göteborg (SE)
(72) Inventor: Viault, Samuel, 37360 Saint-Antoine-du-Rocher (FR); Wensing, Jeoren, 3991 WP Houten (NL); Berruet, Nicolas, 37360 Neuillé-Pont-Pierre (FR); Corbett, Richard, 37230 Fondettes (FR)
(74) Representative: Casalonga, Axel

(56) References cited:
- EP-A2- 2 042 758
- DE-A1-102009 009 128
- JP-A- 2007 009 702
- US-A- 2 582 916
- US-A1- 2004 200 215

## Description

The present invention relates to the field of turbochargers, and in particular those used in combustion engines for automotive vehicles.

In such application, a turbocharger is used to enhance the combustion engine performance by blowing compressed air into the cylinders of said engine.

A turbocharger, according to the preamble of claim 1, is known from DE 10 2009 009 128 A.

A turbocharger generally comprises a housing, a shaft extending through an opening or bore formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of the exhaust gases, the shaft and the compressor wheel are rotated which leads to a compression of the admission gases introduced into the cylinders of the combustion engine.

European patent application EP-A2-2 042 758 discloses a turbocharger comprising a pair of rolling bearings disposed between the shaft and an intermediate bearing casing mounted into the bore of the housing. A cooling water jacket is formed within the housing in order to absorb the heat of the turbine wheel and to limit a temperature rise of the rolling bearings.

The structure of the disclosed turbocharger is complex, thereby leading to a high mounting cost. Otherwise, with such an intermediate bearing casing, the cooling of the rolling bearings may be not satisfactory.

One aim of the present invention is therefore to overcome the aforementioned drawbacks.

It is a particular object of the present invention to provide a turbocharger which is simple to manufacture and economic while guaranteeing good cooling properties.

In one embodiment, there is provided a turbocharger according to claim 1.

In one preferred embodiment, the cooling channel is annular. The cooling channel is advantageously formed within the housing. The cooling channel may extend axially from an end surface of the housing. Preferably, the turbocharger further comprises a cap mounted on the end surface which closes the cooling channel.

In one embodiment, the cooling channel extends axially further than the outer ring and ends in the vicinity of an opposite end surface of the housing.

Preferably, the housing comprises inlet and outlet orifices communicating with the cooling channel.

In one embodiment, the rolling bearing ranges between 30 % and 95 % of the axial dimension of the housing, and preferably ranges between 70% and 80%.

In one embodiment, the rolling bearing further comprises at least two sealing rings disposed radially between the inner and outer rings and delimiting together with said rings a closed space inside which the row of rolling elements is housed.

The present invention and its advantages will be better understood by studying the detailed description of specific embodiments given by way of non-limiting examples and illustrated by the appended drawings on which:
- Figure 1 is an axial section of a turbocharger according to a first example not covered by the claims,
- Figure 2 is a view in radial section on II-II of Figure 1,
- Figure 3 is an axial section of a turbocharger according to an example of the invention, and
- Figure 4 is a view in radial section on IV-IV of Figure 3.

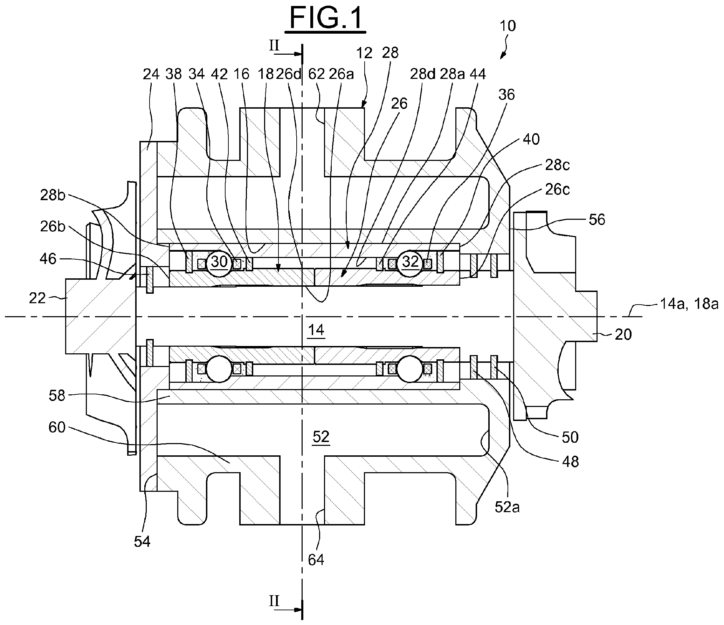

As illustrated on the Figure 1, which illustrates an embodiment of a turbocharger 10 according to an example not covered by the claims, the turbocharger comprises a housing 12, a shaft 14 extending along a longitudinal axis 14a through a cylindrical bore or opening 16 of the housing, a rolling bearing 18 mounted onto the shaft 14 and disposed into the bore 16, a turbine wheel 20 fixed at one end of the shaft 14 and a compressor wheel 22 fixed at an opposite end of said shaft. The turbocharger 10 also comprises a cap 24 fixed at an axial end of the housing 12 on the compressor wheel side. In the disclosed embodiment, the axial length of the rolling bearing 18 ranges between 30% and 95% of the axial dimension of the bore 16 of the housing, and more precisely between 70% and 80%.

The rolling bearing 18 comprises an inner ring 26 and an outer ring 28 between which are housed two rows of rolling elements 30 and 32, which in this case are balls, two annular cages 34, 36 respectively maintaining the circumferential spacing of the rolling elements 30, 32, two annular outer sealing rings 38, 40 and two annular inner sealing rings 42, 44. The axis 18a of the rolling bearing is coaxial with the axis 14a of the shaft of the turbocharger.

The inner and outer rings 26, 28 are concentric and symmetric with respect to a transverse radial plane passing through the centre of the rolling bearing. The rings 26, 28 are of the solid type. A "solid ring" is to be understood as a ring obtained by machining with removal of material (by machining, grinding) from metal tube stock, bar stock, rough forgings and/or rolled blanks.

The outer ring 28 comprises an outer cylindrical surface 28a mounted radially into contact with the bore 16 of the housing and delimited by opposite radial lateral surfaces 28b, 28c which respectively axially come into contact with the cap 24 and a radial shoulder of the housing 12. The outer ring 28 also comprises a bore 28d of cylindrical shape from which are formed toroidal raceways (not referenced) having in cross-section a concave internal profile adapted to the rolling elements 30, 32. The raceways are symmetrical with respect to the transverse radial plane passing through the centre of the rolling bearing.

In the disclosed embodiment, the inner ring 26 is made in two parts which are identical, symmetrical with respect to the transverse radial plane of symmetry of the rolling bearing and mounted axially fixedly one against the other. The inner ring 26 is here composed of two identical half-rings. Alternatively, the inner ring may be made into one part. The inner ring 26 has a bore 26a of cylindrical shape into which the shaft 14 is mounted. Said bore is delimited by opposite radial lateral surfaces 26b and 26c, which are respectively coplanar with the lateral surfaces 28b, 28c of the outer ring. The radial surface 26c axially bears against a radial shoulder of the shaft 14. The inner ring 26 also comprises an exterior cylindrical surface 26d onto which first and second toroidal circular raceways (not referenced) are formed. The said raceways have in cross-section a concave internal profile adapted to the rolling elements 30 and 32, the said raceways being directed radially outwards. The raceways are symmetrical with respect to the transverse radial plane passing through the centre of the rolling bearing.

The inner ring 26 also comprises two annular outer grooves (not referenced) formed radially towards the inside from the exterior surface 26d, respectively in the vicinity of the radial surfaces 26b and 26c, and two annular inner grooves (not referenced) also formed radially towards the inside from the exterior surface 26d. The outer grooves, respectively the inner grooves, are symmetrical with one another relative to the transverse radial plane of symmetry of the rolling bearing. Inside the grooves are fixedly mounted the annular outer and inner sealing rings 38, 40 and 42, 44. The sealing rings 38 to 44 are disposed radially between the inner and outer rings 26, 28. Each sealing ring extends radially towards the outer ring 28 and comes into sliding contact with the bore 28d of said ring. Alternatively, the sealing rings may remain at a small distance from said bore. The sealing rings 38 to 44 are made from metal, advantageously from a thin metal sheet blank. Alternatively, the sealing rings may be made by moulding a synthetic material such as an elastomer. The sealing rings 38 to 44 are continuous in the circumferential direction. To facilitate their fitting into the grooves of the inner ring, each of the sealing rings may alternatively be open at a point of its circumference.

The sealing ring 38 is axially situated on the compressor wheel side and the sealing ring 40 on the turbine wheel side. The sealing ring 38 is located axially between the row of rolling elements 30 and the radial surfaces 26b, 28b of the inner and outer rings, the sealing ring 40 being mounted axially between the row of rolling elements 32 and the radial surfaces 26c, 28c of said rings. The inner sealing rings 42, 44 each delimit together with the inner and outer rings 26, 28 and the corresponding outer sealing ring 38, 40 a closed space for each row of rolling elements 30, 32 and the associated cages 34, 36. Each closed space is filled with a lubricant. Alternatively, it may also be possible to not foresee the inner sealing rings 42, 44 and to delimit a single closed space between the rings 26, 28 and the sealing rings 38, 40 in which the rolling elements 30, 32 and the associated cages 34, 36 are housed so as to be protected against external polluting elements.

The turbocharger 10 is further provided with a sealing ring 46 mounted radially between the shaft 14 and the cap 24 and axially disposed between the compressor wheel 22 and the rolling bearing 18, and with two sealing rings 48, 50 disposed radially between the shoulder of said shaft 14 and the bore 16 of housing and axially mounted between the rolling bearing 18 and the turbine wheel 20. The sealing rings 46 to 50 are fitted into grooves (not referenced) provided on the exterior surface of the shaft 14 and come into sliding contact with the cap 24 or the housing 12. The sealing rings 46 to 50 may be made from metal.

The housing 12 comprises a longitudinal cooling channel 52 extending from a radial end surface 54 of said housing against which the cap 24 is mounted. The cooling channel 52 extends axially further than the outer ring 28 of the rolling bearing and ends in the vicinity of an radial end surface 56 of the housing located on the turbine wheel side, which is axially opposite to the end surface 54. A radial bottom 52a of the cooling channel is axially offset outward towards the end surface 56 with regard to the radial surfaces 26c, 28c of the inner and outer rings. The cooling channel is closed by the cap 24. A seal (not shown) may be mounted between the housing 12 and the cap 14.

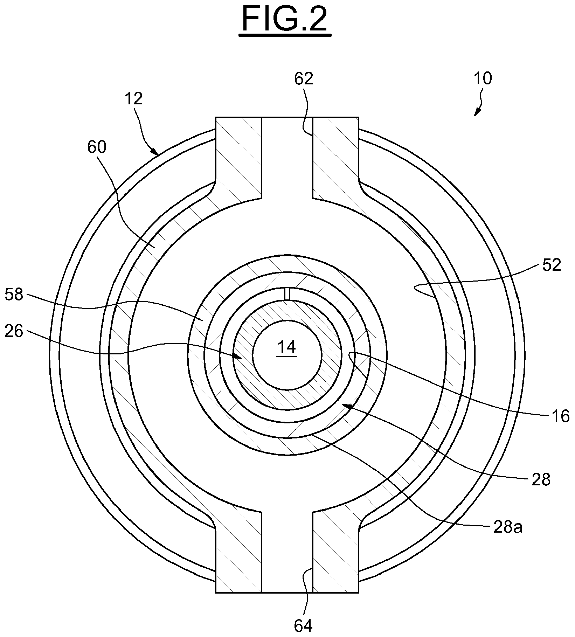

As shown more clearly on Figure 2, the cooling channel 52 formed within the housing is annular and radially surrounds the outer ring 28 of the rolling bearing on its entire length, and more generally radially surrounds the entire length of said bearing. The continuous cooling channel 52 delimits on the housing 12 an inner axial portion 58 comprising the bore 16 inside which is fitted the outer ring 28 of the rolling bearing and an outer axial portion 60 which is concentric with said inner portion.

The housing 12 further comprises inlet and outlet orifices 62, 64 formed by radial passages, made in the thickness of the outer axial portion 60 and diametrically opposed. The inlet and outlet orifices 62, 64 extend from the outer surface of the housing 12 and open into the cooling channel 52 to communicate with said channel. A cooling fluid (not shown), such as water, can be introduced into the housing 12 by passing into the inlet orifice 62, said cooling fluid then enters the annular cooling channel and passes out through the outlet orifice 64.

With the peripheral cooling channel 52 of the housing extending axially along the entire length of the outer ring 28 of the rolling bearing, the cooling of said rolling bearing is achieved in an effective way. Besides, with the mounting of the outer surface 28a of the outer ring directly into the bore 16 of the housing, the cooling effect of the cooling fluid passing through the cooling channel 52 is improved since the outer ring 28 is radially located in the vicinity of said channel.

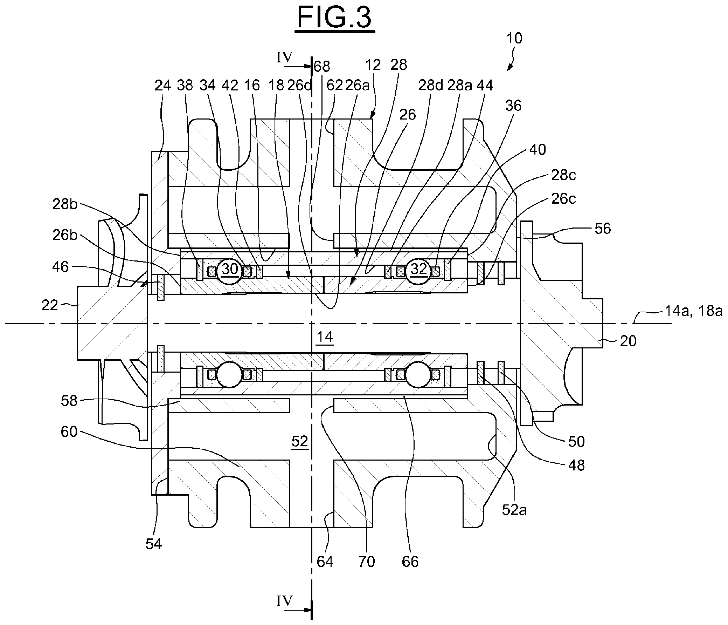

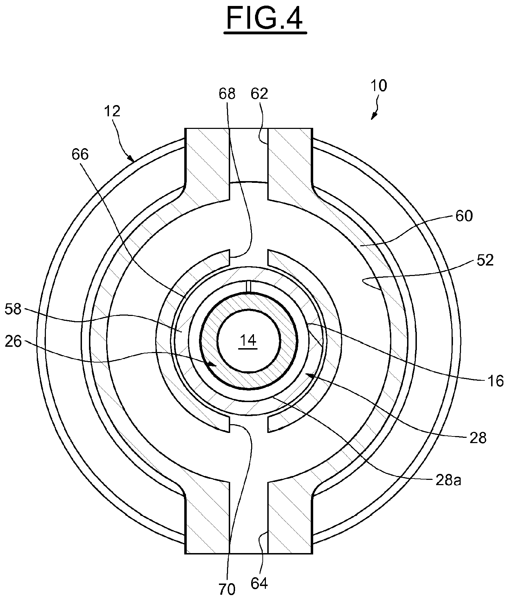

The embodiment, according to the invention, shown on Figures 3 and 4, in which identical parts are given identical references, differs from the previous embodiment in that an annular radial gap or space 66 exists between the outer surface 28a of the outer ring and the bore 16 of the housing, and in that radial passages 68, 70 are provided into the thickness of the inner axial portion 58 of the housing. The annular space 66 is delimited radially by the outer ring 28 and the bore 16 of the housing and axially by the radial shoulder of said housing and the cap 24. In order to seal off the space 66, seals may be mounted between the radial surfaces 28b of the outer ring and the cap 24 and between the radial surfaces 28c of said ring and the housing 12. In the disclosed embodiment, the radial passages 68, 70 are formed by two through-holes diametrically opposed and disposed in the radial plane containing the inlet and outlet orifices 62, 64. The radial passages 68, 70 extend from the cooling channel 52 and pass through the thickness of the inner axial portion 58 of the housing and open into the bore 16 and the annular space 66. The annular space 66 communicates with the cooling channel 52 via the radial passages 68, 70. The cooling fluid passing through the cooling channel 52 is also supplied into the radial space 66 defined between the housing 12 and the outer ring 28 of the rolling bearing. The cooling fluid is in direct contact with the entire length of the outer surface 28a of the outer ring, thereby causing an increase of the cooling effect for the rolling bearing.

Otherwise, the cooling fluid disposed into the radial space 66 may enable to damp the vibrations emitted by the rotation of the turbine and compressor wheels 20, 22. The transmission of the vibrations emitted by said wheels to the housing 12 may be limited. The radial space 66 may act as a cooling and damping space.

-In the illustrated embodiments, the cooling channel is annular and radially surrounds the entire axial length of the outer ring of the rolling bearing. Alternatively, it could also be possible to foresee a housing comprising a plurality of longitudinal cooling channel extending axially along the entire length of the outer ring and, spaced apart from each other in the circumferential direction and disposed radially around said outer ring. The invention applies not only to turbocharger comprising an angular contact ball rolling bearing with a double rows of balls but also to turbocharger comprising other types of rolling bearing, for example rolling bearing having four points contact and/or with a single row of balls or with at least three rows of balls.

Furthermore, the invention applies to rolling bearings comprising a plurality of inner rings and/or a plurality of outer rings. Finally, it has to be made clear that by a turbocharger it is also meant a waste heat recovery turbine, a turbocompound or a compressor.

## Claims

1. Turbocharger comprising a shaft (14), a housing (12), and a turbine wheel (20) and a compressor wheel (22) mounted onto the shaft, the housing comprising at least a longitudinal cooling channel (52) through which a flow of cooling fluid can pass, the turbocharger further comprising only one rolling bearing (18) disposed between the shaft and the housing and comprising an inner ring (26), an outer ring (28) mounted into a bore (16) of the housing and at least one row of rolling elements (30) disposed between the rings, the cooling channel (52) extending axially along at least the entire length of the outer ring (28), **characterized in that** an annular space (66) is defined between the bore (16) of the housing and the entire outer surface (28a) of the outer ring which is mounted directly into said bore, the housing comprising passage means (68, 70) communicating with the cooling channel and opening into said space.

2. Turbocharger according to claim 1, wherein the cooling channel (52) is annular.

3. Turbocharger according to claim 1 or 2, wherein the cooling channel (52) is formed within the housing (12).

4. Turbocharger according to any of the preceding claims, wherein the cooling channel (52) extends axially from an end surface (54) of the housing.

5. Turbocharger according to claim 4, further comprising a cap (24) mounted on the end surface (54) which closes the cooling channel.

6. Turbocharger according to claim 4 or 5, wherein the cooling channel (52) extends axially further than the outer ring (28) and ends in the vicinity of an opposite end surface (56) of the housing.

7. Turbocharger according to any of the preceding claims, wherein the housing comprises inlet and outlet orifices (62, 64) communicating with the cooling channel.

8. Turbocharger according to any of the preceding claims, wherein the axial length of the rolling bearing (18) ranges between 30 % and 95 % of the axial dimension of the housing (12), and preferably ranges between 70% and 80%.

9. Turbocharger according to any of the preceding claims, wherein the rolling bearing further comprises at least two sealing rings (38, 40) disposed radially between the inner and outer rings and delimiting together with said rings a closed space inside which the row of rolling elements is housed.

## Patentansprüche

1. Turbolader, der eine Welle (14), ein Gehäuse (12) sowie ein Turbinenrad (20) und ein auf der Welle montiertes Verdichterrad (22) umfasst, wobei das Gehäuse mindestens einen länglichen Kühlkanal (52) umfasst, durch den ein Kühlfluid strömen kann, wobei der Turbolader weiterhin nur ein zwischen der Welle und dem Gehäuse befindliches Wälzlager (18) umfasst, das einen Innenring (26), einen in einer Bohrung (16) des Gehäuses montierten Außenring (28) sowie mindestens eine Reihe Rollelemente (30), die sich zwischen den Ringen befinden, umfasst, wobei sich der Kühlkanal (52) axial mindestens entlang der gesamten Länge des Außenrings (28) erstreckt, **dadurch gekennzeichnet, dass** ein ringförmiger Raum (66) zwischen der Bohrung (16) des Gehäuses und der gesamten Oberfläche (28a) des direkt in der Bohrung montierten Außenrings definiert ist, wobei das Gehäuse Durchgangsmittel (68, 70) umfasst, die mit dem Kühlkanal in Verbindung stehen und sich in den Raum hinein öffnen.
**dadurch gekennzeichnet, dass** zwischen der Bohrung (16) des Gehäuses und der gesamten Außenfläche (28a) des direkt in der Bohrung montierten Außenrings ein ringförmiger Raum (66) definiert ist

2. Turbolader nach Anspruch 1, bei dem der Kühlkanal (52) ringförmig ist.

3. Turbolader nach Anspruch 1 oder 2, bei dem der Kühlkanal (52) innerhalb des Gehäuses (12) ausgebildet ist.

4. Turbolader nach einem der vorstehend aufgeführten Ansprüche, bei dem sich der Kühlkanal (52) von einer Endoberfläche (54) des Gehäuses aus axial erstreckt.

5. Turbolader nach Anspruch 4, der weiterhin eine Kappe (24) umfasst, die an der Endoberfläche (54) montiert ist, die den Kühlkanal abschließt.

6. Turbolader nach Anspruch 4 oder 5, bei dem sich der Kühlkanal (52) axial weiter als der Außenring (28) erstreckt und in der Nähe einer gegenüberliegenden Endoberfläche (56) des Gehäuses endet.

7. Turbolader nach einem der vorstehend aufgeführten Ansprüche, bei dem das Gehäuse Einlass- und Auslassdüsen (62, 64) umfasst, die mit dem Kühlkanal in Verbindung stehen.

8. Turbolader nach einem der vorstehend aufgeführten Ansprüche, bei dem die axiale Länge des Wälzlagers (18) im Bereich von 30% bis 95% der axialen Abmessung des Gehäuses (12) und vorzugsweise zwischen 70% und 80% liegt.

9. Turbolader nach einem der vorstehend aufgeführten Ansprüche, bei dem das Wälzlager weiterhin mindestens zwei Dichtungsringe (38, 40) umfasst, die sich radial zwischen den Innen- und Außenringen befinden und zusammen mit diesen Ringen einen geschlossenen Raum abgrenzen, in dem die Reihe Rollelemente untergebracht ist.

## Revendications

1. Turbocompresseur, comprenant un arbre (14), un carter (12), et une roue de turbine (20) et une roue de compresseur (22) montées sur l'arbre, le carter comprenant au moins un canal de refroidissement longitudinal (52) à travers lequel un flux de fluide de refroidissement peut passer, le turbocompresseur comprenant en outre seulement un palier à roulement (18) disposé entre l'arbre et le carter et comprenant une bague interne (26), une bague externe (28) montée dans un alésage (16) du carter et au moins une rangée d'éléments de roulement (30) disposés entre les bagues, le canal de refroidissement (52) s'étendant axialement le long d'au moins toute la longueur de la bague externe (28), **caractérisé en ce qu'**un espace annulaire (66) est défini entre l'alésage (16) du carter et toute la surface extérieure (28a) de la bague externe qui est montée directement dans ledit alésage, le carter comprenant des moyens de passage (68, 70) en communication avec le canal de refroidissement et s'ouvrant sur ledit espace.

2. Turbocompresseur selon la revendication 1, dans lequel le canal de refroidissement (52) est annulaire.

3. Turbocompresseur selon la revendication 1 ou 2, dans lequel le canal de refroidissement (52) est formé à l'intérieur du carter (12).

4. Turbocompresseur selon l'une quelconque des revendications précédentes, dans lequel le canal de refroidissement (52) s'étend axialement à partir d'une surface d'extrémité (54) du carter.

5. Turbocompresseur selon la revendication 4, comprenant en outre un couvercle (24) monté sur la surface d'extrémité (54) qui ferme le canal de refroidissement.

6. Turbocompresseur selon la revendication 4 ou 5, dans lequel le canal de refroidissement (52) s'étend axialement plus loin que la bague externe (28) et se termine à proximité d'une surface d'extrémité opposée (56) du carter.

7. Turbocompresseur selon l'une quelconque des revendications précédentes, dans lequel le carter comprend des orifices d'entrée et de sortie (62, 64) en communication avec le canal de refroidissement.

8. Turbocompresseur selon l'une quelconque des revendications précédentes, dans lequel la longueur axiale du palier à roulement (18) est comprise entre 30 % et 95 % de la dimension axiale du carter (12), et de préférence est comprise entre 70 % et 80 %.

9. Turbocompresseur selon l'une quelconque des revendications précédentes, dans lequel le palier à roulement comprend en outre au moins deux bagues d'étanchéité (38, 40) disposées radialement entre les bagues interne et externe et délimitant, conjointement avec lesdites bagues, un espace fermé à l'intérieur duquel la rangée d'éléments de roulement est logée.
